# EUROPÄISCHE PATENTSCHRIFT

(11) **EP 2 615 325 B1**
(45) Veröffentlichungstag und Bekanntmachung des Hinweises auf die Patenterteilung: **02.10.2019**
(21) Anmeldenummer: 12000216.7
(22) Anmeldetag: 16.01.2012
(51) Int. Cl.: F16F 13/26, F16F 15/00

(54) **Aktives Lager**
Active bearing
Palier actif

(43) Veröffentlichungstag der Anmeldung: 17.07.2013
(73) Patentinhaber: Fraunhofer-Gesellschaft zur Förderung der angewandten Forschung e.V., 80686 München (DE); Technische Universität Darmstadt, 64289 Darmstadt (DE)
(72) Erfinder: Kraus, Roman, 61184 Karben (DE); Jungblut, Timo, 64289 Darmstadt (DE); Herold, Sven, 64823 Groß-Umstadt (DE); Melz, Tobias, 64289 Darmstadt (DE)
(74) Vertreter: Rösler, Uwe

(56) Entgegenhaltungen:
- WO-A2-01/29445
- DE-A1- 4 116 270
- DE-A1- 19 617 840
- DE-A1-102008 055 535

## Beschreibung

### Technisches Gebiet

Die Erfindung bezieht sich auf ein aktives Lager zur kontrollierten Schwingungsübertragung zwischen einer schwingenden Last und einer Abstützeinheit. Das aktive Lager dient vornehmlich zur Schwingungsminderung, d.h. zur Schwingungsdämpfung und/oder Schwingungsentkopplung und/oder zur Schwingungskompensation der schwingenden Last gegenüber der Abstützeinheit. Ebenso vermag das aktive Lager den Schwingungszustand der schwingenden Last zu beeinflussen.

Das aktive Lager verfügt hierzu über eine Schnittstelle zur Anbringung an die zu lagernde Last, deren zuordenbarer statischer und dynamischer Lasteintrag über die Schnittstelle auf das Lager einwirkt. Zur Abstützung des statischen Lasteintrages, typischerweise bedingt durch die Gewichtskraft der Last, ist wenigstens ein mit der Schnittstelle und der Abstützeinheit in Wirkverbindung stehendes Abstützelement vorgesehen, das einen ersten Kraftpfad bildet. Ferner sind wenigstens ein sich an der Abstützeinheit mittel- oder unmittelbar abstützender Linearaktor, eine mit dem wenigstens einen Linearaktor in Wirkverbindung stehende Getriebeeinheit zur Wegübersetzung einer vom Linearaktor herrührenden Stellwegänderung bzw. eines Stellweges, sowie wenigstens eine Entkopplungseinheit vorgesehen, die zur Entkopplung des statischen sowie zur Übertragung des dynamischen Lasteintrages dient und über die die Getriebeeinheit mittel- oder unmittelbar in Wirkverbindung mit der Schnittstelle steht, wobei der wenigstens eine Linearaktor, die Getriebeeinheit und die wenigstens eine Entkopplungseinheit in serieller Abfolge angeordnet sind und einen zweiten Kraftpfad, der typischerweise parallel zum ersten Kraftpfad orientiert ist, für den dynamischen Lasteintrag bilden.

### Stand der Technik

In zahlreichen technischen Anwendungen werden mechanische Strukturen durch Maschinen zu unerwünschten Schwingungen angeregt. Um die Übertragung der anregenden Kräfte auf die mechanischen Strukturen zu reduzieren, werden in vielen Fällen die Störquellen, bspw. in Form von Motoren oder anderen Aggregaten, elastisch gelagert. Um zu vermeiden, dass die auf die elastischen Lager einwirkenden Schwingungsamplituden unzulässig groß werden, verfügen derartige Lager über eine ausreichend hohe Dämpfung, die jedoch wiederum das Vermögen zur Schwingungsentkopplung negativ zu beeinträchtigen vermag. Dieser bei elastischen Lagern bestehende Konflikt mündet im Ergebnis in einem Kompromiss zwischen einer möglichst hohen Dämpfung für Störschwingungen im unteren Frequenzbereich sowie einer möglichst geringen Dämpfung für Störschwingungen höherer Frequenzen.

Eine bekannte, die vorstehende Lagerproblematik lösende Lagertopologie weist ein zwischen einer Last und einer Abstützeinheit eingebrachtes, nachgiebiges Element, beispielsweise in Form einer Feder, auf, zu dem eine Reihenschaltung aus einem vorwiegend nachgiebigen sowie einem vorwiegend dämpfenden Element parallel geschaltet ist. Eine technische Umsetzung einer derartigen Lagertopologie stellt ein in der EP 2 253 863 A2 beschriebenes Hydrolager dar, das eine zur Lastanbringung dienende Schnittstelle sowie eine Abstützeinheit vorsieht, die beide über ein elastisches Abstützelement verbunden sind und zusammen mit einer Trennwand einen mit einem Fluid gefüllten Arbeitsraum begrenzen. Durch einen innerhalb der Trennwand vorgesehenen Dämpfungskanal ist der Arbeitsraum mit einem Ausgleichsraum fluidisch kommunizierend verbunden, der gemeinsam mit der Trennwand von einer elastisch nachgiebigen Begrenzungswand umgeben ist.

Hydrolager dieser Art werden in erster Linie in Kraftfahrzeugen eingesetzt, um die im Betrieb auftretenden Schwingungen zu dämpfen bzw. zu isolieren. Dabei übernimmt das elastische Abstützelement, das aus einem hochelastischen Gummi besteht, die akustische Isolierung, während die Dämpfung durch einen Resonanzeffekt im Dämpfungskanal erreicht wird, der den Arbeitsraum mit dem Ausgleichsraum hydraulisch verbindet.

Eine weiterführende Ausgestaltung für ein elastisches Lager sieht die Integration wenigstens eines geeignet ansteuerbaren Aktors vor, so dass die durch die Last auf das Lager übertragenen Störschwingungen durch seitens der Aktorik erzeugte und in das Lager eingeleiteten Gegenschwingungen möglichst vollständig kompensiert werden. Die für die Aktoransteuerung erforderlichen Steuersignale werden mit Hilfe einer geeigneten Regelungsstrategie aus Messgrößen bestimmt. Die hierfür erforderlichen Sensoren können sich sowohl im Lager als auch außerhalb des Lagers befinden. Je nach Regelungsstrategie kommen Kraft-, Weg-, Geschwindigkeits-, Beschleunigungssensoren, Mikrofone oder andere Sensortechniken zur Anwendung. Eine bevorzugte Regelungsstrategie zur Schwingungsentkopplung bzw. -kompensation sieht das gezielte aktorische Einleiten von Gegenschwingungen in Bezug zu den lastseitig auf das Lager einwirkenden Störschwingungen vor. Um die hierfür erforderliche Aktorik möglichst leicht, klein und kostengünstig realisieren zu können, sollte der wenigstens eine, die Gegenschwingungen initiierende Aktor vom statischen Lasteintrag, der im Wesentlichen durch die Gewichtskraft der jeweiligen Last verursacht ist, entkoppelt sein, so dass lediglich dynamische, durch die Störschwingungen verursachte Belastungen auf den wenigstens einen Aktor einwirken.

Ein derartig technisch realisiertes aktives Lager ist in der DE 10 2008 055 535 A1 beschrieben. Hierbei handelt es sich um ein aktives dämpfendes Hydrauliklager, vorzugsweise zur Verwendung als Motorlager für ein Kraftfahrzeug, das über eine Arbeitskammer verfügt, die über einen Ringkanal mit einer Ausgleichskammer verbunden ist. Zur Dämpfung niederfrequenter Schwingungen seitens des Motors gegenüber einer von Schwingungen zu beruhigenden Karosserie fließt aus der Arbeitskammer über den Ringkanal Hydraulikflüssigkeit in die Ausgleichskammer und zurück. Werden hingegen in das Motorlager hochfrequente Schwingungen eingeleitet, so ist der Ringkanal dynamisch verschlossen. Zur Isolation hochfrequenter Störschwingungen zwischen Motor und Karosserie wird eine die Arbeitskammer teilweise begrenzende Membran mit Hilfe eines Aktors ausgelenkt, so dass das Volumen der Arbeitskammer trotz Einwirken hochfrequenter Schwingungen in das Motorlager möglichst konstant gehalten wird. Zur Auslenkung der Membran dient ein piezoelektrischer Linearaktor, dessen kleine Stellwege mit Hilfe eines Wegübersetzungsmechanismuses in große Stellwegänderungen der Membran umgewandelt werden, so dass die Membran große Wege zurücklegen und große Volumina in der Arbeitskammer ausgleichen kann. Je nach Ansteuerung des Linearaktors können auf diese Weise auf das aktive Hydrolager einwirkende Störschwingungen kompensiert werden.

Eine weitere Dämpfungseinrichtung ist in der Druckschrift DE 41 16 270 A1 offenbart, die ein Abstützelement, einen Wegübersetzungsmechanismus, einen Aktor, ein elastomeres Element sowie eine Dämpfungseinheit vorsieht, vergleichbar zu einer Anordnung wie unmittelbar vorstehend beschrieben; die Vorrichtungen unterscheiden sich lediglich in der Anordnung der Elemente, die in der Druckschrift nicht der Entkopplung der Kombination aus Aktor und Wegübersetzungsmechanismus von statisch und niederfrequent wirkenden Kräften dient.

Eine Entkopplungseinrichtung in Form eines hydraulischen Motorlagers für den Einsatz im Kraftfahrzeugbereich beschreibt die Druckschrift DE 196 17 840 A1. Solche Motorlager werden als Hydrolager bezeichnet und sind durch zwei mit Hydraulikflüssigkeit gefüllte Arbeitskammern gekennzeichnet, die über einen Überströmkanal in Wirkverbindung stehen. Zusätzlich zu der allgemein bekannten Form, weist das Lager eine weitere Kammer auf, die mit elektrorheologischer Flüssigkeit (ERF) gefüllt ist. Durch Anlegen einer Spannung kann die Viskosität dieser Flüssigkeit beeinflusst werden. Durch das Einstellen der Viskosität der ERF können die dynamischen Eigenschaften des Lagers gezielt und abhängig vom jeweiligen Betriebszustand verändert werden. Der Einsatz von ERF ermöglicht allerdings nur die Veränderung der Lagereigenschaften, insbesondere der Steifigkeit und der Dämpfung, nicht aber den Eintrag zusätzlicher Kräfte die den Störschwingungen entgegen wirken.

### Darstellung der Erfindung

Der Erfindung liegt die Aufgabe zugrunde, ein aktives Lager zur kontrollierten Schwingungsübertragung, vornehmlich zu Zwecken einer Schwingungsminderung zwischen einer Störschwingungen verursachenden Last und einer Abstützeinheit mit einer von den auf das aktive Lager einwirkenden statischen Kräften entkoppelten Aktorik, die vorzugsweise in Form eines Linearaktors mit einer den Stellweg des Linearaktors vergrößernden Getriebeeinheit kombiniert ist, derart weiterzubilden, dass die Wirksamkeit des Aktors qualitativ sowie auch quantitativ verbessert werden soll, d. h. zum einen gilt es die aktorisch aufzubringende Kraft zur aktiven Begegnung von Störschwingungen, die es gilt in das Lager einzuleiten, möglichst unabhängig von der Frequenz der Störschwingungen auf einen für den jeweiligen Aktor optimierten Arbeitsbereich auszulegen, zum anderen gilt es den Störschwingungen innerhalb eines vergrößerten Frequenzbereichs, insbesondere zu niedrigeren Frequenzen hin vergrößert, wirksam mit Hilfe der Aktorik begegnen zu können. Das aktive Lager soll über einen möglichst einfachen Aufbau verfügen.

Die Lösung der der Erfindung zugrunde liegenden Aufgabe ist im Anspruch 1 angegeben. Das lösungsgemäße aktive Lager in vorteilhafter Weise weiterbildende Merkmale sind in den Unteransprüchen sowie in dem Beschreibungstext insbesondere unter Bezugnahme auf die illustrierten Ausführungsbeispiele erläutert.

Das lösungsgemäße aktive Lager, das zumindest zur Schwingungsminderung dient, d. h. zur Schwingungsdämpfung und/oder Schwingungsenkopplung und/oder Schwingungskompensation, verfügt über die folgenden Komponenten: Zur Anbringung an eine zu lagernde, Störschwingungen ausgesetzte oder erzeugende Last ist eine Schnittstelle vorgesehen, über die ein durch die Last bedingter statischer sowie auch dynamischer Lasteintrag auf das Lager einwirkt. Zur Abstützung des auf das Lager einwirkenden statischen Lasteintrages ist zwischen der Schnittstelle und einer Abstützeinheit, die es gilt gegenüber dem Störschwingungen behafteten Lasteintrag zu entkoppeln, wenigstens ein Abstützelement, bspw. in Form einer elastischen Struktur, vorgesehen, das einen die Schnittstelle und die Abstützeinheit miteinander verbindenden ersten Kraftpfad darstellt. Ferner ist wenigstens ein Linearaktor vorgesehen, der sich an der Abstützeinheit mittel- oder unmittelbar abstützt. Mit dem wenigstens einen Linearaktor ist eine Getriebeeinheit zur Vergrößerung der aktorischen Stellwege bzw. Stellwegänderungen verbunden. Desweiteren ist zur Entkopplung des statischen sowie zur Übertragung des dynamischen Lasteintrages eine Entkopplungseinheit vorgesehen, über die die Getriebeeinheit und somit auch der Linearaktor mittel- oder unmittelbar in Wirkverbindung mit der Schnittstelle stehen, wobei der wenigstens eine Linearaktor, die Getriebeeinheit und die wenigstens eine Entkopplungseinheit in serieller Abfolge angeordnet sind und einen zweiten Kraftpfad, der vorzugsweise parallel zum ersten Kraftpfad orientiert ist, für den dynamischen Lasteintrag bilden. Lösungsgemäß zeichnet sich das aktive Lager, das die vorstehend bezeichneten Komponenten vorsieht, dadurch aus, dass längs der seriellen Anordnung aus dem wenigstens einen Linearaktor, der Getriebeeinheit und der wenigstens einen Entkopplungseinheit wenigstens ein elastisch verformbares Element längs des zweiten Kraftpfades eingebracht ist, und dass das wenigstens eine Abstützelement und das elastisch verformbare Element jeweils als separate und räumlich voneinander getrennte Einheiten ausgebildet und angeordnet sind. Die Getriebeeinheit ist als mechanischer Wegübersetzungsmechanismus ausgebildet, der über wenigstens einen Hebelmechanismus verfügt. Zudem sind die längs der beiden Kraftpfade enthaltenen Komponenten des aktiven Lagers von einem kompressiblen Medium umgeben.

Um für eine wirksame Entkopplung des längs des zweiten Kraftpfades vorgesehenen Linearaktors von einer statisch auf das Lager einwirkenden Last, die typischerweise von der Gewichtskraft eines schwingenden, mit dem aktiven Lager über die Schnittstelle verbundenen Objektes herrührt, und zugleich für eine in weiten Bereichen frequenzunabhängige Krafteinleitung durch den Linearaktor längs des zweiten Kraftpfades sorgen zu können, wird lösungsgemäß die typischerweise über eine frequenzabhängige dynamische Steifigkeit verfügende Entkopplungseinheit mit wenigstens einem elastisch verformbaren Element in serieller Kraftflussabfolge verbunden, das über eine weitgehend frequenzunabhängige dynamische Steifigkeit verfügt, gleichsam der Steifigkeit eines Federelementes. In besonders vorteilhafter Weise sind zudem die Dämpfungseigenschaften der wenigstens einen Entkopplungseinheit sowie des wenigstens einen elastisch verformbaren Elementes derart gewählt, so dass die Entkopplungseinheit über eine größere Dämpfung als das elastisch verformbaren Elementes verfügt. Wie die weiteren Ausführungen unter Bezugnahme auf die entsprechenden Figuren zeigen werden, beeinflusst die Wahl der Dämpfung der Entkopplungseinheit maßgeblich eine untere Grenzfrequenz, ab der mit zunehmenden Frequenzen eine wirksame Krafteinleitung durch den Linearaktor längs des zweiten Kraftpfades zu Zwecken einer effektiven Schwingungsminderung möglich ist. Vorzugsweise gilt es die Dämpfung der Entkopplungseinheit möglichst hoch zu wählen, um auf diese Weise die Wirksamkeit des Linearaktors in Bereiche niedrigerer Frequenzen auszudehnen.

Wie bereits erwähnt, verfügt die Entkopplungseinheit über eine dynamische Steifigkeit, die von der Frequenz des dynamischen Lasteintrages abhängt. Typischerweise nimmt die dynamische Steifigkeit der Entkopplungseinheit mit zunehmenden Frequenzen zu. Demgegenüber verfügt das elastisch verformbare Element über eine dynamische Steifigkeit, die im Vergleich zur vorstehend erläuterten Frequenzabhängigkeit der dynamischen Steifigkeit der Entkopplungseinheit weitgehend frequenzunabhängig ist. Anders ausgedrückt ist die dynamische Steifigkeit des elastisch verformbaren Elementes kleiner, d. h. sehr viel kleiner als die dynamische Steifigkeit der Entkopplungseinheit, zumindest bei Frequenzen ab einer bestimmten Frequenz.

Durch die serielle Anordnung der Entkopplungseinheit sowie des elastisch verformbaren Elementes längs des zweiten Kraftpfades ergibt sich systembedingt, dass die dynamische Gesamtsteifigkeit, die sich zumindest aus der seriellen Kombination aus dem verformbaren Element und der Entkopplungseinheit ergibt, nie größer sein kann, als die Steifigkeiten der einzelnen Komponenten. Somit begrenzt die dynamische Steifigkeit des elastisch verformbaren Elementes die maximale dynamische Gesamtsteifigkeit des in Serie längs des zweiten Kraftpfades angeordneten Ensembles, umfassend den wenigstens einen Linearaktor, die Getriebeeinheit, die wenigstens eine Entkopplungseinheit sowie das wenigstens eine elastisch verformbare Element. Auf diese Weise wird der Linearaktor vor großen Schwingungsamplituden insbesondere im Bereich hoher Frequenzen, aufgrund der begrenzten dynamischen Steifigkeit durch das elastisch verformbare Element besser geschützt, als im Vergleich zu bekannten, vergleichbaren Lagersystemen.

Die längs des zweiten Kraftpfades angeordnete, wenigstens eine Entkopplungseinheit sowie das wenigstens eine elastisch verformbare Element sind als separate voneinander getrennte Komponenten ausgebildet, die ihrerseits über die vorstehend beschriebenen unterschiedlichen statischen sowie auch dynamischen Eigenschaften verfügen und durch das serielle Zusammenwirken längs des zweiten Kraftpfades insbesondere die im Linearaktor zum größten Teil gewichtsbedingten, statischen Belastungen durch den Lasteintrag zu entkoppeln vermögen. Darüber hinaus ermöglicht die separate Ausbildung und Anordnung der Entkopplungseinheit und des wenigstens einen elastisch verformbaren Elementes längs des zweiten Kraftpfades eine klar definierte Aufgabentrennung für beide Komponenten, wodurch eine Voraussetzung für eine systematische Optimierung der Lagereigenschaften durch aufeinander abgestimmtes Anpassen der Dämpfungs- und Steifigkeitseigenschaften beider betreffenden Elemente auf jeweils unterschiedliche Schwingungsaufgaben bzw. -anforderungen geschaffen ist. Auf diese Weise wird eine optimierte Auslegung des Gesamtsystems "Lager" erheblich vereinfacht.

Dem vorstehenden Gedanken ebenfalls Rechnung tragend, ist es besonders vorteilhaft, das aktive Lager derart auszubilden, so dass die Komponenten längs des ersten und zweiten Kraftpfads möglichst unbeeinflusst voneinander ausgebildet und angeordnet sind, d. h. mit Ausnahme der gemeinsamen Anlenkungspunkte einerseits an der Schnittstelle und andererseits an der Abstützeinheit bestehen keine weiteren kraftübertragenden Wirkverbindungen zwischen den Komponenten längs beider Kraftpfade. In vorteilhafter Weise sind die längs der beiden Kraftpfade enthaltenen Komponenten des aktiven Lagers von einem kompressiblen Medium, vorzugsweise Gas, vorzugsweise Luft, umgeben. Insbesondere die Entkopplungseinheit längs des zweiten Kraftpfades sowie das den ersten Kraftpfad definierende Abstützelement sind jeweils als separate Einheiten ausgebildet und räumlich beabstandet zueinander angeordnet, so dass zwischen der Entkopplungseinheit und dem Abstützelement keine direkte Wirkverbindung besteht.

Die separate Ausbildung und Anordnung des wenigstens einen Abstützelementes im ersten Kraftpfad und des wenigstens einen elastisch verformbaren Elementes längs des zweiten Kraftpfades gewährleisten eine klar definierte Aufgabentrennung für beide Komponenten, wodurch eine Voraussetzung für eine systematische Optimierung der Lagereigenschaften durch aufeinander abgestimmtes Anpassen der Steifigkeitseigenschaften beider betreffenden Elemente auf jeweils unterschiedliche Schwingungsaufgaben bzw. -anforderungen geschaffen ist. Auf diese Weise wird eine optimierte Auslegung des Gesamtsystems "Lager" erheblich vereinfacht.

Die längs des zweiten Kraftpfades vorgesehene Getriebeeinheit ist als mechanischer Wegvergrößerungsmechanismus ausgebildet und verfügt somit über wenigstens einen Hebelmechanismus, der es ermöglicht die nur geringen Stellwege bzw. Stellwegänderungen eines vorzugsweise als Festkörperaktor ausgebildeten Linearaktor, bspw. in Form eines Piezostapelaktors oder magneto- oder elektrostriktiven Aktors, zu vergrößern. Da die Getriebeeinheit bzw. der Wegvergrößerungsmechanismus prinzipbedingt längs des Kraftflusses des Linearaktors angeordnet ist, reduzieren sich durch die Entkopplung des statischen Lasteintrages längs des zweiten Kraftpfades mittels der Entkopplungseinheit automatisch auch die Festigkeitsanforderungen an die Getriebeeinheit, wodurch einfache und kostengünstige Getriebeeinheiten eingesetzt werden können. Hinzukommt, dass sich auch die Anforderungen an den Linearaktor verringern, da dieser Kräfte erfährt, die um das Wegübersetzungsverhältnis größer sind, als am Getriebe- bzw. Wegübersetzungseingang.

In einer weiteren Ausführungsvariante des aktiven Lagers, das als Getriebeeinheit über einen über wenigstens einen Hebelmechanismus verfügenden mechanischen Wegübersetzungsmechanismus verfügt, ist der gesamte Hebelmechanismus oder zumindest Teile des Hebelmechanismus elastisch verformbar ausgebildet. Da, wie vorstehend erläutert, der Wegübersetzungsmechanismus prinzipbedingt stets im Kraftfluss des Linearaktors und demzufolge längs des zweiten Kraftpfades angeordnet ist, ist eine integrative Bauform der Getriebeeinheit und des wenigstens einen elastisch verformbaren Elementes denkbar und realisierbar. Auch im Falle einer integrativen Ausbildung von elastisch verformbaren Element und Getriebeeinheit können die statischen und dynamischen Eigenschaften des elastisch verformbaren Elementes sowie der Getriebeeinheit zumindest innerhalb gewisser Grenzen unabhängig voneinander gewählt bzw. eingestellt werden.

Grundsätzlich ist die Reihenfolge der seriellen Anordnung der wenigstens einen Entkopplungseinheit, des wenigstens einen elastisch verformbaren Elementes, des Linearaktors sowie die Getriebeeinheit beliebig längs des zweiten Kraftpfades zu wählen. Auch können mehrere elastisch verformbare Elemente längs des zweiten Kraftpfades angeordnet sein, die sich darüber hinaus in ihrer speziellen Ausbildungsform unterscheiden können. Bevorzugte Ausführungsformen für das elastisch verformbare Element stellen bspw. Federelemente, aus elastomeren Material bestehende Formkörper oder eine Kombination aus wenigstens einem Federelement und wenigstens einem aus elastomeren Material bestehenden Formkörper dar. Bspw. ist eine Ausführungsform zur Ausbildung eines aktiven Lagers denkbar, bei der der mit einer Getriebeeinheit kombinierte Linearaktor im Kraftfluss des zweiten Kraftpfades jeweils beidseitig unmittelbar anschließend mit einem elastisch verformbaren Element verbunden ist. Eine derartige Aufteilung des elastisch verformbaren Elements in zwei Einzelkörper ist in jenen Fällen vorteilhaft, in denen die Resonanzfrequenz des Verbundes aus Getriebeeinheit und Linearaktor im oder nahe des angeregten Frequenzbereiches des aktiven Lagers selbst liegt. Weitere Ausführungen hierzu sind im Zusammenhang mit der Beschreibung eines diesbezüglichen Ausführungsbeispiels im Weiteren offenbart.

Zur Ausbildung der wenigstens einen Entkopplungseinheit eignet sich in bevorzugter Weise ein viskoser Flüssigkeitsdämpfer, der längs des zweiten Kraftpfades innerhalb eines von einem Gehäuse umfassten Hydraulikflüssigkeitsbades einen linear auslenkbaren, stempelartig ausgebildeten Verdrängungskörper vorsieht. Um das Dämpfungsverhalten eines derartigen Flüssigkeitsdämpfers vorzugsweise auch während des Betriebes des aktiven Lagers variabel einstellen zu können, eignet sich in einer möglichen Ausführungsform die Verwendung einer elektrorheologischen oder magnetorheologischen Hydraulikflüssigkeit, innerhalb der der Verdrängungskörper linear längs des zweiten Kraftpfades beweglich auslenkbar gelagert ist, wobei zur Veränderung der Dämpfung die Entkopplungseinheit eine elektrische bzw. magnetische Felder erzeugende Einheit zur Beeinflussung der Viskosität der elektrorheologischen bzw. magnetorheologischen Flüssigkeit aufweist. Diesbezügliche elektrische bzw. magnetische Felder erzeugende Einheiten sind dem Fachmann bekannt, so dass eine weitere diesbezügliche Beschreibung nicht erforderlich ist.

Für den Betrieb des aktiven Lagers sind an sich bekannte Maßnahmen, wie sie aus dem Stand der Technik bekannt sind, erforderlich. So gilt es eine Steuereinheit vorzusehen, die ein mit wenigstens einem mittel- oder unmittelbaren an die Last gekoppelten Signalgeber erfassbares Signal, das Störschwingungen repräsentiert, aufnimmt und nach Verarbeitung des Signals Steuersignale generiert, die den wenigstens einen Linearaktor ansteuern, um eine Schwingungsminderung zu bewirken. Im Falle der vorstehend erläuterten Ausführungsform mit einer durch die Entkopplungseinheit variabel vorgebbaren Dämpfung, ist längs des zweiten Kraftpfades wenigstens ein Sensor integriert, der mit einer Auswerte- und Steuereinheit verbunden ist, die unter Zugrundelegung einer Zielfunktion ein Steuersignal zur Beeinflussung der einstellbaren Dämpfung erzeugt. Typischerweise werden derartige aktive Lager zur Schwingungsentkopplung zwischen einer schwingenden Last und einer Abstützeinheit eingebracht. Ein bevorzugtes Einsatzgebiet eines lösungsgemäß ausgebildeten Lagers betrifft die Schwingungsminderung einer Motoreinheit gegenüber einer die Motoreinheit abzustützenden Tragstruktur, wie bspw. die Karosserie eines Kraftfahrzeuges oder Schienenfahrzeuges, die Zelle eines Flugzeuges oder die Struktur eines Schiffskörpers. Umgekehrt kann das aktive Lager auch zur Schwingungsminderung wenigstens einer schwingungsempfindlichen Komponente oder Struktur gegenüber einer schwingenden Tragstruktur eingesetzt werden. Dies ist bspw. der Fall bei einem Labor- oder Messtisch, den es gilt von dem schwingenden Boden schwingungsarm zu entkoppeln.

Das aktive Lager kann auch zur gezielten bzw. kontrollierten Beeinflussung des Schwingungszustandes der schwingenden Last verwendet werden, indem die vorstehende Steuereinheit unter Zugrundelegung einer entsprechenden Zielfunktion den Linearaktor geeignet ansteuert. So können auf diese Weise bspw. hochfrequente Schwingungsanteile gezielt gedämpft werden und niederfrequente Schwingungsanteile der schwingenden Last unbeeinflusst bleiben. Durch die erwähnte zusätzliche Möglichkeit einer aktiven Einflussnahme auf den Schwingungszustand der schwingenden Last vermag das aktive Lager die Schwingungsübertragung zwischen Last und Abstützeinheit zu kontrollieren. Die Möglichkeiten der kontrollierten Schwingungsübertragung mittels des aktiven Lagers reichen von einer vollständigen Schwingungsentkopplung mittels erläuteter Schwingungskompensation zwischen den schwingenden Last und der Abstützeinheit bis hin zu einer geeigneten Schwingungsanregung der Last. Im Weiteren wird unter Bezugnahme auf konkrete Ausführungsbeispiele die Lagerfunktion der Schwingungsminderung im Sinne einer Schwingungsdämpfung und/oder Schwingungsentkopplung und/oder zur Schwingungskompensation der schwingenden Last gegenüber der Abstützeinheit erläutert.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Lagertopologie eines lösungsgemäß ausgebildeten aktiven Lagers,
- Fig. 2a, b: Diagrammdarstellungen zur exemplarischen Erläuterung des Krafteinleitungsvermögens des lösungsgemäß ausgebildeten aktiven Lagers,
- Fig. 3: erste Ausführungsvariante eines lösungsgemäß ausgebildeten aktiven Lagers,
- Fig. 4: zweite Ausführungsvariante eines lösungsgemäß ausgebildeten aktiven Lagers,
- Fig. 5: dritte Ausführungsvariante eines lösungsgemäß ausgebildeten aktiven Lagers und
- Fig. 6: Ausführungsbeispiel eines aktiven Lagers mit elastisch verformbar ausgebildeter Getriebeeinheit.

### Wege zur Ausführung der Erfindung, gewerbliche Verwendbarkeit

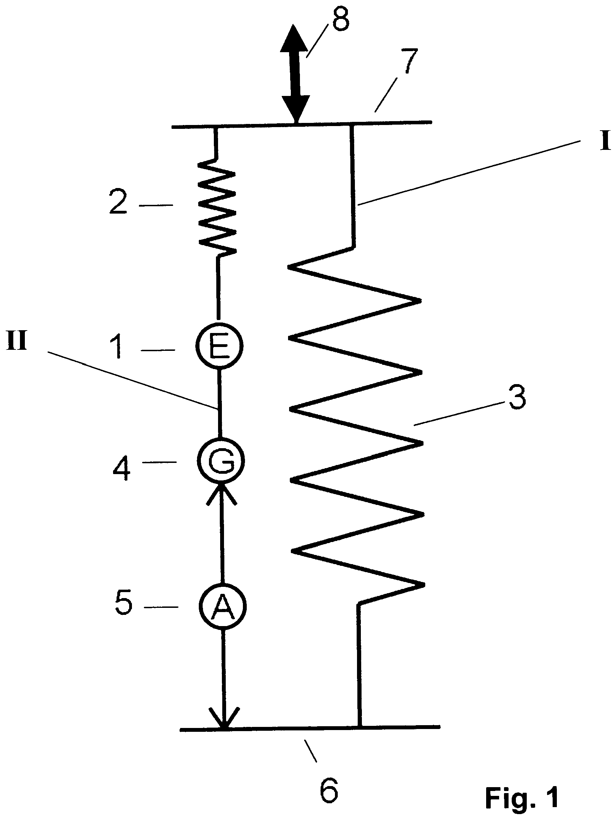

In Figur 1 ist in schematischer Übersicht eine Lagertopologie eines lösungsgemäß ausgebildeten aktiven Lagers illustriert. Es sei angenommen, dass an einer Schnittstelle 7 eine mit Störschwingungen behaftete Last 8 angreift. Das aktive Lager soll in der Lage sein den dynamischen Anteil des Lasteintrages gegenüber einer Abstützeinheit 6 möglichst vollständig zu entkoppeln.

Das aktive Lager weist hierzu wenigstens zwei vorzugsweise parallel zueinander orientierte Kraftpfade, einen ersten Kraftpfad I sowie einen zweiten Kraftpfad II auf. Längs des ersten Kraftpfades I ist ein Abstützelement 3 sowohl mit der Schnittstelle 7 als auch mittelbar mit der Abstützeinheit 6 verbunden, das zur Aufnahme des statisch wirkenden Lastanteils der Last 8 dient. Der statische Lastanteil rührt typischer Weise in Folge der Gewichtskraft eines auf der Schnittstelle 7 lagernden Objektes her, oder kann andere oder weitere Ursachen haben, wie bspw. Antriebsmomente innerhalb eines motorbetriebenen Fahrzeuges. Das Abstützelement 3, das typischerweise aus einem Tragfederelement oder mehreren Tragfederelementen besteht, ist vorzugsweise aus einem Material mit geringer Dämpfung gefertigt, so dass eine bestmögliche Isolationswirkung zwischen der schwingenden Last 8 und der Abstützeinheit 6 bei hohen Anregungsfrequenzen gewährleistet ist.

Längs des zweiten Kraftpfades II sind ein Linearaktor 5, eine Getriebeeinheit 4, eine Entkopplungseinheit 1 sowie ein elastisch verformbares Element 2 in serieller Abfolge zwischen der Schnittstelle 7 und der Abstützeinheit 6 angeordnet. Die serielle Anordnung der vier längs des Kraftpfades 2 vorgesehenen Einzelkomponenten 1, 2, 4, 5 ist grundsätzlich beliebig wählbar.

Das längs des zweiten Kraftpfades II angeordnete Ensemble bestehend aus Linearaktor 5, Getriebeeinheit 4, Entkopplungseinheit 1 sowie elastisch verformbaren Element 2 ist mit Ausnahme der gemeinsamen Anbindung zur Schnittstelle 7 sowie zur beruhigenden Einheit 6 ohne weitere Wirkverbindung zu dem wenigstens einen Abstützelement 3 längs des ersten Kraftpfades I ausgebildet und angeordnet. Wie die weiteren Ausführungsbeispiele zeigen werden, sind die längs des zweiten Kraftpfades II angeordneten Komponenten 1, 2, 4, 5 räumlich separiert zum Abstützelement 3 angeordnet und vorzugsweise von einem kompressiblen Medium, bspw. Luft, voneinander getrennt.

Zur aktiven Schwingungsbegegnung des dynamischen Lasteintrages über die Schnittstelle 7 sind grundsätzlich beliebige Arten von Linearaktoren 5 einsetzbar. Besonders geeignet sind Festkörperaktoren in Form von Piezoaktoren, gleichsam auch elektro- oder magnetostriktive Aktoren, deren Stellwege bzw. Stellwegänderungen sehr klein sind, so dass derartige Linearaktoren zur Stellwegvergrößerung mit einer Getriebeeinheit 4, vorzugsweise in Form eines mechanischen Wegübersetzungsmechanismuses kombiniert sind. Die Entkopplungseinheit 1 dient zur Entkopplung des statischen Lasteintrages längs des zweiten Kraftpfades II, so dass auf den Linearaktor 5 keine oder vernachlässigbar geringe die Linearaktorstruktur möglicherweise beschädigende oder gar zerstörende statische Lastanteile einwirken können. Gleichwohl ermöglicht die Entkopplungseinheit 1 die Übertragung dynamischer Lastanteile, die sowohl von Seiten der Last 8 sowie auch von Seiten des Linearaktors 5 durch entsprechende Ansteuerung des Aktors zu Zwecken der Schwingungsminderung über die Getriebeeinheit 4 mittels Stellwegänderungen längs des zweiten Kraftpfades II eingeleitet werden. In besonders vorteilhafter Weise ist die Entkopplungseinheit 1 als dämpfend wirkendes Element bspw. in Form eines viskosen Flüssigkeitsdämpfers ausgebildet.

Das elastisch verformbare Element 2, das über eine federnde Wirkung längs des zweiten Kraftpfades II verfügt, kann als Federelement, aus einem elastomeren Material bestehenden Formkörper oder aus einer Kombination aus Federelement und Formkörper bestehen. Im Unterschied zu einer der Entkopplungseinheit 1 zuordenbaren dynamischen Steifigkeit, die mit zunehmenden Schwingungsfrequenzen zunimmt, ist das dynamische Steifigkeitsverhalten des elastisch verformbaren Elementes 2 weitgehend frequenzunabhängig und kleiner, bzw. sehr viel kleiner als die mit zunehmenden Frequenzen größer werdende dynamische Steifigkeit der Entkopplungseinheit, zumindest bei Frequenzen ab einer bestimmten Frequenz. Somit vermag auch das elastisch verformbare Element 2 die dem Komponentenensemble, bestehend aus elastisch verformbaren Element 2, Entkopplungseinheit 1, Getriebeeinheit 4 und Linearaktor 5, zuordenbare maximale dynamische Gesamtsteifigkeit zu begrenzen.

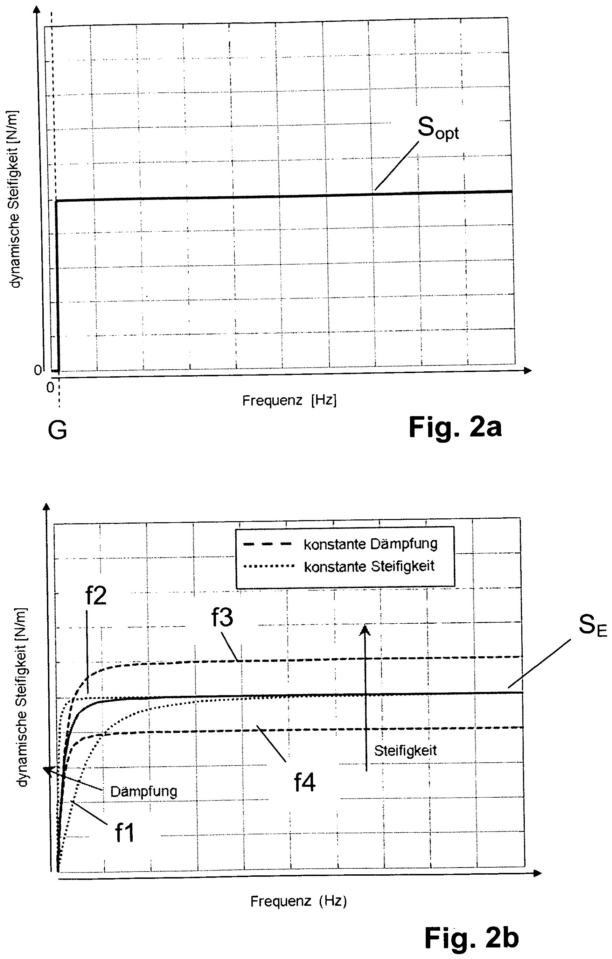

Auch der Kombination lediglich aus Linearaktor 5 und Getriebeeinheit 4 kann eine dynamische Steifigkeit zugeordnet werden, die gleichfalls größer ist als die dem elastisch verformbaren Element zuordenbare dynamische Steifigkeit. Eine ideal aufeinander abgestimmte Wahl der dynamischen Steifigkeiten der einzelnen, längs des zweiten Kraftpfades II angeordneten Komponenten 1, 2, 4, 5 ist derart zu treffen, dass die dynamische Gesamtsteifigkeit des längs des zweiten Kraftpfades II angeordneten Komponentenensembles dem in Figur 2a dargestellten dynamischen Steifigkeitsverhalten entspricht.

Figur 2a zeigt ein Diagramm, längs dessen Ordinate Werte für die dynamische Steifigkeit in Einheiten [N/m] und längs dessen Abszisse Frequenzwerte in Einheiten [Hz] aufgetragen sind.

Der in dem Diagramm dargestellte Funktionsverlauf stellt einen Idealfall für die dynamische Steifigkeitseigenschaft des längs des zweiten Kraftpfades angeordneten idealen Komponentenensembles dar.

Im statischen Bereich, also bei 0 Hz, sollen keinerlei Kräfte auf den Linearaktor 5 übertragen werden, so dass in diesem Bereich die statische Steifigkeit des Gesamtensembles 0 beträgt. Oberhalb einer vom jeweiligen Anwendungsfall abhängigen Grenzfrequenz G, sollte die dynamische Steifigkeit längs des zweiten Kraftpfades II einen für das Einleiten von Aktorkräften optimalen dynamischen Steifigkeitswert Sₒₚₜ aufweisen, der über den kompletten verbleibenden Frequenzbereich möglichst konstant beibehalten werden soll. Die optimale Steifigkeit Sₒₚₜ ist ebenso wie die Grenzfrequenz G, vom Einsatzzweck und den anwendungsspezifischen Randbedingungen, denen das aktive Lager ausgesetzt ist, abhängig.

Figur 2b zeigt gleichsam ein Diagramm zur Illustration der frequenzabhängigen dynamischen Steifigkeit wenigstens einer in Serie geschalteten Kombination aus einer Entkopplungseinheit 1 und einem elastisch verformbaren Element 2. Insbesondere sei in diesem Fall angenommen, dass die Entkopplungseinheit 1 aus einem dämpfend wirkenden Element besteht, das einerseits den zweiten Kraftpfad und insbesondere den Linearaktor 5 von statischen Lasten entkoppelt und andererseits bereits bei geringen Störfrequenzen eine im Verhältnis zum elastisch verformbaren Element 2 große dynamische Steifigkeit aufweist.

Im statischen Fall ist die Gesamtsteifigkeit des längs des zweiten Kraftpfades angeordneten Komponentenensembles, letztlich durch die statische Steifigkeit der dämpfend wirkenden Entkopplungseinheit 1 vorgegeben und im Idealfall 0, so dass längs des zweiten Kraftpfades bedingt durch die Entkopplungseinheit 1 keine Kräfte auf den Linearaktor 5 einwirken. Die dynamische Steifigkeit des Komponentenensembles längs des zweiten Kraftpfades wird erheblich von den dynamischen Steifigkeitseigenschaften des elastisch verformbaren Elementes 2 sowie der Entkopplungseinheit 1 beeinflusst. Je höher die Dämpfung der dämpfenden Entkopplungseinheit 1 gewählt wird, umso schneller konvergiert der Verlauf der dynamischen Steifigkeit mit zunehmender Frequenz gegen eine Endsteifigkeit S_{E}, die jeweils der Steifigkeit des elastisch verformbaren Elementes entspricht.

Im Falle der punktiert dargestellten Kurvenverläufe f1 und f2 ist das dynamische Steifigkeitsverhalten jeweils einer Kombination aus einem einheitlich elastisch verformbaren Element mit jeweils unterschiedlich dämpfenden Entkopplungseinheiten dargestellt. Im Falle der Funktion f1 ist die Dämpfung der Entkopplungseinheit geringer gewählt als im Falle des Funktionsverlaufes f2. Demgegenüber stellen die strichliert dargestellten Funktionsverläufe f3 und f4 das dynamische Steifigkeitsverhalten einer Kombination aus jeweils gleichen dämpfenden Kopplungseinheiten mit in der Steifigkeit unterschiedlich gewählten elastisch verformbaren Elementen dar. Bei f4 ist die Steifigkeit des elastisch verformbaren Elementes kleiner als im Falle f3.

Anhand der Funktionsverläufe ist klar ersichtlich, dass die Wahl der Dämpfung einen entscheidenden Einfluss auf die Lage der Grenzfrequenz G besitzt, ab der der Linearaktor wirksam Kräfte längs des zweiten Kraftpfades einzuleiten in der Lage ist. Die Steifigkeitswahl bezüglich des elastisch verformbaren Elementes hat auf die Lage der Grenzfrequenz G einen nur untergeordneten Einfluss. Somit ist es möglich, durch geeignete Dämpfungsvorgaben bereits bei niedrigen Störfrequenzen große Kräfte durch den Linearaktor längs des zweiten Kraftpfades einzuleiten. Darüber hinaus wird die dynamische Steifigkeit durch die Steifigkeit des elastisch verformbaren Elementes 2 begrenzt, die in weiten Bereichen keine Abhängigkeit von der Frequenz zeigt.

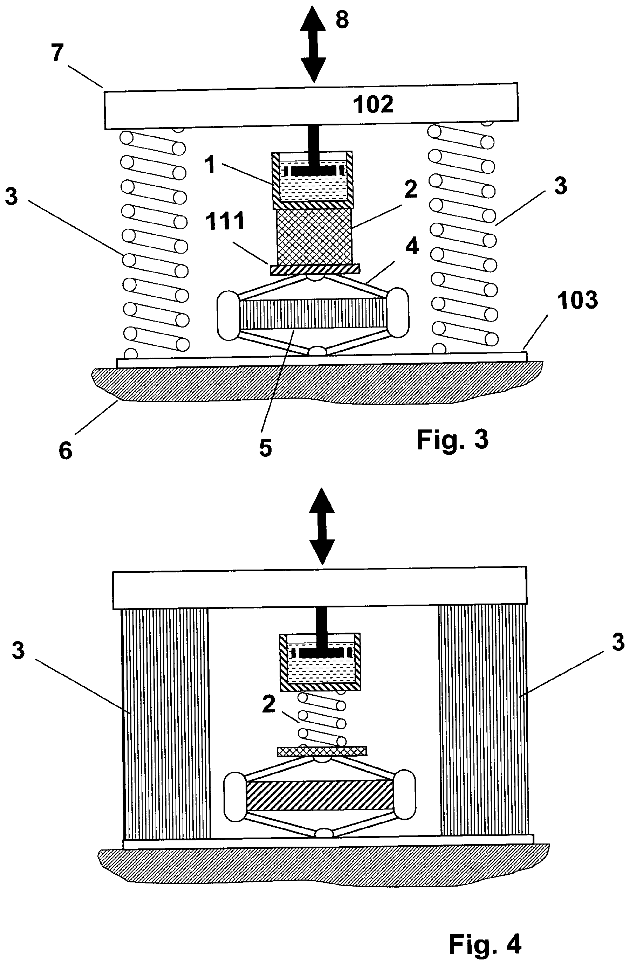

In Figur 3 ist eine mögliche Realisierungsform eines lösungsgemäß ausgebildeten aktiven Lagers gezeigt. Eine mit Störschwingungen beaufschlagte Last 8 ist über eine Schnittstelle 7 gegenüber einer Abstützeinheit 6 mit möglichst geringer Schwingungsübertragung zu lagern. Hierzu ist die Schnittstelle 7 in Form einer Befestigungsplatte 102 ausgebildet, die lastseitig eine Befestigungsmöglichkeit zur Anbringung der Last 8 aufweist. Zwischen der als Befestigungsplatte 102 ausgebildeten Schnittstelle 7 und einer unteren Befestigungsplatte 103, die unmittelbar auf der Abstützeinheit 6 aufliegt, sind zur Abstützung des jeweils statisch wirkenden Lasteintrages zwei oder mehr als Tragfedern ausgebildete Abstützelemente 3 vorgesehen, die im illustrierten Fall als Spiralfedern ausgebildet sind und aus Metall, Karbon oder ähnlichen Werkstoffen gefertigt sind. Die als Tragfedern ausgebildeten Abstützelemente 3 vermögen in erster Linie den statischen, zumeist durch die Gewichtskraft verursachten Lasteintrag über das Lager abzustützen.

Zwischen beiden im Ausführungsbeispiel gemäß Figur 3 dargestellten Abstützelementen 3 sind in serieller Anordnung ein mit einer Getriebeeinheit 4 verbundener Linearaktor 5, eine über eine Zwischenplatte 111 mit der Getriebeeinheit 4 verbundenes, als elastomerer Formkörper ausgebildetes, elastisch verformbares Element 2 sowie eine Entkopplungseinheit 1 vorgesehen, die als Flüssigkeitsdämpfer ausgebildet ist. Das aus Linearaktor 5, Getriebeeinheit 4, elastisch verformbares Element 2 sowie Entkopplungseinheit 1 bestehende Ensemble stellt einen zwischen der als Befestigungsplatte 102 ausgebildeten Schnittstelle 7 und der unteren, auf der Abstützeinheit 6 aufliegenden Befestigungsplatte 103 wirkenden zweiten Kraftpfad II dar, der parallel zu den durch die Abstützelemente 3 definierten jeweils ersten Kraftpfade orientiert ist. Längs des zweiten Kraftpfades können aufgrund der dämpfend wirkenden Entkopplungseinheit 1 ausschließlich dynamische Anteile des Lasteintrages übertragen werden, sofern deren Frequenzen über einer unteren Grenzfrequenz G, wie vorstehend unter Bezugnahme auf die Figuren 2a und b beschrieben, liegen.

Die dämpfend wirkende Entkopplungseinheit 1 ist als Flüssigkeitsdämpfer ausgebildet, der ein mit einer Hydraulikflüssigkeit befülltes Gehäuse aufweist, innerhalb dem ein stempelartig ausgebildeter Verdrängungskörper längs des Kraftflusses des zweiten Kraftpfades II bidirektional auslenkbar gelagert ist und im dargestellten Fall einseitig mit der als Befestigungsplatte 102 ausgebildeten Schnittstelle 7 fest verbunden ist.

Um zu vermeiden, dass die längs des zweiten Kraftpfades II angeordneten Komponenten in Wechselwirkung mit den Abstützelementen 3 treten, sind diese getrennt zu den Abstützelementen 3 angeordnet und lediglich von einem kompressiblen Medium, vorzugsweise Luft umgeben.

In einer weiteren Ausführungsform lässt sich die Dämpfungswirkung des Entkopplungselementes 1 unter Verwendung einer elektrorheologischen oder magnetorheologischen Hydraulikflüssigkeit gezielt beeinflussen. So ändern elektrorheologische oder magnetorheologische Fluide in Abhängigkeit eines äußeren elektrischen bzw. magnetischen Feldes ihre rheologischen Eigenschaften, d. h. Viskosität, um auf diese Weise das Kraftübertragungsverhalten des sich innerhalb der Flüssigkeit linear beweglich angeordneten stempelartig ausgebildeten Verdrängungskörpers aktiv zu beeinflussen. Zur Erzeugung eines entsprechenden elektrischen oder magnetischen Feldes sind dem Fachmann bekannte Anordnungen entsprechend vorzusehen.

Beim Einsatz derartiger Fluide als Hydraulikflüssigkeit besteht außerdem die Möglichkeit, den Linearaktor 5 sowie die Getriebeeinheit 4 zusätzlich vor Überlastung zu schützen. Dazu ist im Lager ein zusätzlicher Kraftsensor vorzusehen, welcher die auf den Linearaktor 5 wirkende Kraft bestimmt. Bei Überschreitung vorgegebener Schwellwerte, z.B. die auf den Linearaktor 5 wirkende Kraft oder dessen Verformung, wird mit Hilfe einer Signalverarbeitung die Kraftübertragung durch das entkoppelnde Element entsprechend reduziert, bspw. durch Beeinflussung der Viskosität der Hydraulikflüssigkeit.

In Figur 4 ist eine alternative Ausführungsform zur Realisierung eines aktiven Lagers dargestellt, das grundsätzlich baugleich zu der in Figur 3 dargestellten Ausführungsform ausgebildet ist, jedoch im Unterschied zu Figur 3 die Abstützelemente 3 als elastomere Formkörper und das elastisch verformbare Element 2 als Federelement ausgebildet sind. Die übrigen Komponenten sind unverändert verglichen zum Ausführungsbeispiel gemäß Figur 3. Auch sind beliebige Kombinationen in Bezug auf die Ausführung der Abstützelemente 3 und des wenigstens einen elastisch verformbaren Elementes 2 aus den konkret in den Figuren 3 und 4 angegebenen Realisierungsformen möglich.

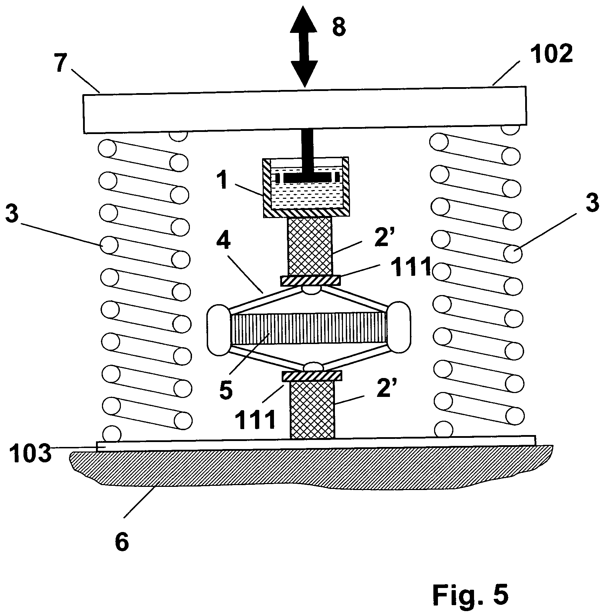

In Figur 5 ist ein aktives Lager illustriert, dessen Linearaktor 5 und Getriebeeinheit 4 jeweils zwischen zwei getrennt längs des zweiten Kraftpfades II ausgebildeten elastisch verformbaren Elementen 2', 2' angeordnet sind. Im Übrigen ist die weitere Ausbildung des aktiven Lagers vergleichbar mit den Ausführungsbeispielen gemäß der Figuren 3 und 4, so dass auf eine erneute Erläuterung der mit den bereits eingeführten Bezugszeichen versehenen Komponenten verzichtet wird. Durch die in Figur 5 dargestellte Aufteilung des einen elastisch verformbaren Elementes 2 in zwei separate, elastisch verformbare Elemente 2', 2' kann Einfluss auf die Resonanzfrequenz des Linearaktors 5 in Kombination mit der Getriebeeinheit 4 genommen werden. Dies ist insbesondere in jenen Fällen vorteilhaft oder gar erforderlich, in denen die Resonanzfrequenz aus der Kombination von Linearaktor 5 und Getriebeeinheit 4 im oder nahe des jeweiligen Betriebsbereiches des Lagers selbst liegt. In diesem Fall kann durch geeignete Wahl jeweils der Steifigkeit beider elastisch verformbarer Elemente 2', 2' eine Verschiebung der Resonanzfrequenz vorgenommen werden, die sich vom Betriebsbereich des aktiven Lagers deutlich unterscheidet.

Durch die in Figur 5 dargestellte Aufteilung des elastisch verformbaren Elementes in zwei Teile 2', 2', die insbesondere beidseitig über jeweils eine Kontaktplatte 111 an der Getriebeeinheit 4 angeordnet sind, kann bei symmetrisch zur Längserstreckung aufgebauter Einheit bestehend aus der Getriebeeinheit 4 und dem Linearaktor 5 und bei identischer Ausbildung beider Teile 2', 2' erreicht werden, dass der Linearaktor 5 im Betrieb seine eigene Linearaktormasse nicht bewegen muss, d.h. der Linearaktor 5 bleibt in Bezug zum Kraftfluss längs des zweiten Kraftpfades in Ruhe. Auf diese Weise kann die Resonanzfrequenz der Getriebeeinheit 4 verbunden mit dem Linearaktors 5 in einen höheren Frequenzbereich verschoben werden. Des weiteren wird die Kombination aus Linearaktor 5 und Getriebeeinheit 4 durch die beidseitig elastische Lagerung vor äußeren mechanischen Stößen geschützt und im Falle von elektrisch nicht leitendem Elastomermaterial für die Ausbildung beider elastischer verformbarer Elemente 2', 2' eine elektrische Isolation zur Umgebung geschaffen.

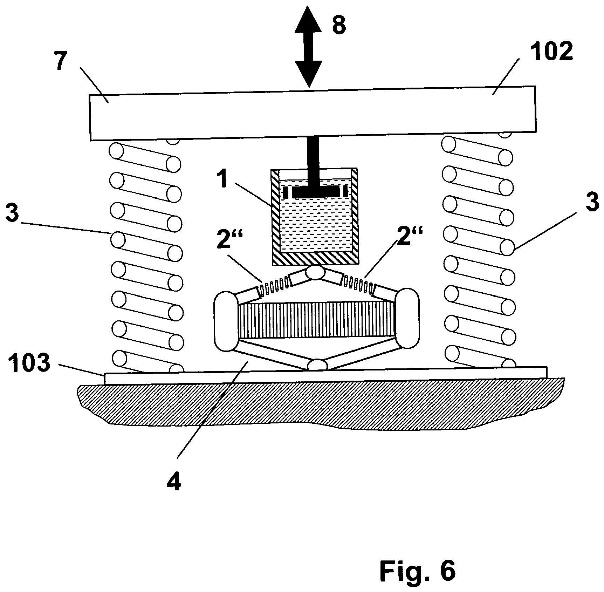

In Figur 6 ist ein weiteres Ausführungsbeispiel zur Realisierung eines lösungsgemäß ausgebildeten aktiven Lagers illustriert, das über eine sehr kompakte Bauform verfügt, zumal längs des zweiten Kraftpfades II das elastisch verformbare Element 2 integrativ mit der Getriebeeinheit 4 kombiniert ist. Wie bei den bereits vorstehend beschriebenen Getriebeeinheiten 4 handelt es sich hierbei um einen mechanischen Wegübersetzungsmechanismus, der wenigstens zwei Hebelmechanismen, einen längs des zweiten Kraftpfades oberhalb und einen unterhalb des Linearaktors 5 angebrachten Hebelmechanismus, verfügt. Im dargestellten Fall sieht der jeweils obere Hebelmechanismus längs der beiden über eine Gelenkeinheit schwenkbar miteinander verbundenen Hebelbarme jeweils ein elastisch verformbares Element 2", 2" vor, bspw. in Form einer Spiralfeder, durch die die Steifigkeit zumindest des oberen Hebelmechanismus signifikant beeinflusst ist. Selbstverständlich können auch alternative Maßnahmen ergriffen werden, um in die Getriebeeinheit zusätzliche, längs des zweiten Kraftpfades wirksame Elastizität einzubringen, so dass die Getriebeeinheit weicher ist als es zur Erfüllung der bloßen Gelenkfunktion erforderlich, bspw. durch Hebelarme, die durch Materialwahl oder Formgebung weicher sind als es zur Erfüllung der Kraftübertragungsfunktion erforderlich ist.

Das in Figur 6 illustrierte Ausführungsbeispiel soll verdeutlichen, dass die Funktion des jeweils elastisch verformbaren Elementes auch durch eine geeignete Ausbildung der Getriebeeinheit 4 realisierbar ist.

Auch ist es denkbar, die Abstützelemente 3, die im Falle der Figuren 3, 5 und 6 als Tragfedern oder im Falle der Figur 4 aus einem aus elastomeren Material bestehenden Formkörper ausgebildet sind, alternativ in Form wenigstens eines an sich bekannten, passiven Hydrauliklager auszubilden. Wesentlich hierbei ist, dass über die Abstützelemente 3 der statische Lasteintrag zwischen der Schnittstelle 7 und der Abstützeinheit 6 abgefangen wird.

### Bezugszeichenliste

- 1: Entkopplungseinheit
- 2: Elastisch verformbares Element
- 2': Zwei elastisch verformbare Elemente
- 2": Spiralfeder
- 3: Abstützelement
- 4: Getriebeeinheit, mechanischer Wegübersetzungsmechanismus
- 5: Linearaktor
- 6: Abstützeinheit
- 7: Schnittstelle
- 8: Last
- 102: Befestigungsplatte
- 103: Untere Befestigungsplatte
- 111: Zwischenplatte

## Patentansprüche

1. Aktives Lager zur kontrollierten Schwingungsübertragung mit
a) einer Schnittstelle (7) zur Anbringung an eine zu lagernde Last (8), deren zuordenbarer statischer und dynamischer Lasteintrag über die Schnittstelle (7) auf das Lager einwirkt,
b) wenigstens einem mit der Schnittstelle (7) und einer Abstützeinheit (6) in Wirkverbindung stehenden Abstützelement (3), das zumindest den statischen Lasteintrag der Last über einen ersten Kraftpfad abstützt,
c) wenigstens ein sich an der Abstützeinheit (6) mittel- oder unmittelbar abstützender Linearaktor (5),
d) eine mit dem wenigstens einen Linearaktor (5) in Wirkverbindung stehende Getriebeeinheit (4) zur Wegübersetzung einer vom Linearaktor (5) herrührenden Stellwegänderung,
e) wenigstens eine Entkopplungseinheit (1), die zur Entkopplung des statischen sowie zur Übertragung des dynamischen Lasteintrages dient und über die die Getriebeeinheit (4) mittel- oder unmittelbar in Wirkverbindung mit der Schnittstelle (7) steht,
wobei der wenigstens eine Linearaktor (5), die Getriebeeinheit (4) und die wenigstens eine Entkopplungseinheit (1) seriell zueinander angeordnet sind und einen zweiten Kraftpfad für den dynamischen Lasteintrag bilden,
wobei längs der seriellen Anordnung aus dem wenigstens einen Linearaktor (5), der Getriebeeinheit (4) und der wenigstens einen Entkopplungseinheit (1) wenigstens ein elastisch verformbares Element (2) längs des zweiten Kraftpfades eingebracht ist, dass das Abstützelement (3) und das elastisch verformbare Element (2) jeweils als separate und räumlich voneinander getrennte Einheiten ausgebildet und angeordnet sind **dadurch gekennzeichnet dass** die Getriebeeinheit als mechanischer Wegübersetzungsmechanismus ausgebildet ist, der über wenigstens einen Hebelmechanismus verfügt, und
dass die längs der beiden Kraftpfade enthaltenen Komponenten des aktiven Lagers von einem kompressiblen Medium umgeben sind.

2. Aktives Lager nach Anspruch 1,
**dadurch gekennzeichnet, dass** die Entkopplungseinheit (1) eine dynamische Steifigkeit besitzt, die von der Frequenz des dynamischen Lasteintrages abhängt.

3. Aktives Lager nach Anspruch 2,
**dadurch gekennzeichnet, dass** die dynamische Steifigkeit der Entkopplungseinheit (1) zumindest in einem Frequenzbereich mit zunehmender Frequenz zunimmt.

4. Aktives Lager nach einem der Ansprüche 1 bis 3,
**dadurch gekennzeichnet, dass** die dynamische Steifigkeit des wenigstens einen elastisch verformbaren Elementes (2) weitgehend unabhängig von der Frequenz ist oder dass das wenigstens eine elastisch verformbare Element (2) eine dynamische Steifigkeit besitzt, die zumindest kleiner ist als die dynamische Steifigkeit der Entkopplungseinheit (1), und
dass die Steifigkeit des elastisch verformbaren Elements (2) eine maximale dynamische Steifigkeit eines in Serie, längs des zweiten Kraftpfades angeordneten Ensembles, umfassend den wenigstens einen Linearaktor (5), die Getriebeeinheit (4), die wenigstens eine Entkopplungseinheit (1) sowie das wenigstens eine elastisch verformbare Element (2), begrenzt.

5. Aktives Lager nach einem der Ansprüche 1 bis 4,
**dadurch gekennzeichnet, dass** das wenigstens eine elastisch verformbare Element (2) wenigstens ein Federelement ist oder wenigstens einen aus elastomeren Material bestehenden Formkörper aufweist oder eine Kombination aus wenigstens einem Federelement oder wenigstens einen aus elastomeren Material bestehenden Formkörper aufweist.

6. Aktives Lager nach einem der Ansprüche 1 bis 5,
**dadurch gekennzeichnet, dass** die Entkopplungseinheit (1) eine größere Dämpfung besitzt als eine dem elastisch verformbaren Element (2) zuordenbare Dämpfung.

7. Aktives Lager nach einem der Ansprüche 1 bis 6,
**dadurch gekennzeichnet, dass** die Entkopplungseinheit (1) als viskoser Flüssigkeitsdämpfer ausgebildet ist, oder wenigstens ein dämpfendes Material aufweist oder eine Kombination aus viskosem Flüssigkeitsdämpfer und dämpfenden Material ist.

8. Aktives Lager nach einem der Ansprüche 1 bis 7,
**dadurch gekennzeichnet, dass** die Entkopplungseinheit (1) über eine variabel einstellbare Dämpfung verfügt.

9. Aktives Lager nach Anspruch 8,
**dadurch gekennzeichnet, dass** längs des zweiten Kraftpfades wenigstens ein Lastaufnehmender Sensor integriert ist, der mit einer Auswerte- und Steuereinheit verbunden ist, die unter Zugrundelegung einer Zielfunktion ein Steuersignal zur Beeinflussung der einstellbaren Dämpfung erzeugt.

10. Aktives Lager nach einem der Ansprüche 1 bis 9,
**dadurch gekennzeichnet, dass** eine Steuereinheit vorgesehen ist, die ein mit wenigstens einem mittel- oder unmittelbar an die Last gekoppelten Signalgeber erfassbares Signal, das Störschwingungen repräsentiert, aufnimmt und nach Verarbeitung des Signales Steuersignale generiert, die den wenigstens einen Linearaktor (5) ansteuern, um eine kontrollierte Schwingungsübertragung zwischen der Last und der Abstützeinheit (6) zu bewirken.

11. Aktives Lager nach einem der Ansprüche 1 bis 10,
**dadurch gekennzeichnet, dass** der wenigstens eine Linearaktor (5) in Form eines Festkörperaktors mit einer quer zum zweiten Kraftpfad angeordneten Längserstreckung ausgebildet ist, längs der die Stellwegänderung erfolgt,
dass die Getriebeeinheit (4) einen zweiteiligen, weitestgehend symmetrisch zur Längserstreckung des Linearaktors (5) ausgebildeten und angeordneten und mit diesem in Wirkverbindung stehenden Hebelmechanismus aufweist, der Stellwegänderungen des Linearaktors (5) in längs des zweiten Kraftpfades orientierte, und in entgegengesetzte Raumrichtungen wirkende Wegänderungen umwandelt, und
dass die Getriebeeinheit (4) längs des zweiten Kraftpfades zwischen zwei, dem wenigstens einen elastisch verformbaren Element (2) funktionell entsprechenden, elastischen Komponenten gelagert ist.

12. Aktives Lager nach Anspruch 11,
**dadurch gekennzeichnet, dass** der zweiteilige, symmetrisch zur Längserstreckung des Linearaktors (5) angeordnete und mit diesem in Wirkverbindung stehende Hebelmechanismus derart ausgebildet ist, dass die längs des zweiten Kraftpfades orientierten und in entgegen gesetzte Raumrichtungen wirkenden Wegänderungen gleichgroß sind.

13. Aktives Lager nach einem der Ansprüche 1 bis 12,
**dadurch gekennzeichnet, dass** die mit dem wenigstens einen Linearaktor (5) in Wirkverbindung stehende Getriebeeinheit wenigstens ein Mittel zur Wegübersetzung aufweist, das elastisch verformbar ausgebildet und das elastisch verformbare Element (2) längs des zweiten Kraftpfades ist.

14. Verwendung eines aktiven Lagers nach einem der Ansprüche 1 bis 13 wenigstens zur Schwingungsminderung wenigstens einer Motoreinheit gegenüber einer die Motoreinheit abstützenden Tragstruktur.

15. Verwendung nach Anspruch 14, in Land-, Wasser- oder Luft-Fahrzeugen, in denen die Tragstruktur als Kraftfahrzeug- oder Schienenfahrzeugkarosserie, Schiffskörper oder Flugzeugstruktur ausgebildet ist.

16. Verwendung eines aktiven Lagers nach einem der Ansprüche 1 bis 13 wenigstens zur Schwingungsminderung wenigstens einer schwingungsempfindlichen Komponente oder Struktur gegenüber einer schwingenden Tragstruktur.

17. Verwendung eines aktiven Lagers nach einem der Ansprüche 1 bis 13 zur Beeinflussung des Schwingungszustandes der Last.

## Claims

1. Active bearing for controlled vibration transmission comprising:
a) an interface (7) for attachment to a load to be supported (8) of which the static and dynamic load input acts on the bearing via the interface (7),
b) at least one support element (3) which is in operative connection with the interface (7) and a support unit (6) and supports at least the static load input to the load via a first force path,
c) at least one linear actuator (5) which bears directly or indirectly on the support unit (6),
d) a gearbox unit (4) which is in operative connection with the at least one linear actuator (5) for transmission of an actuating path change originating from the linear actuator (5),
e) at least one decoupling unit (1), which serves to decouple the static load and to transmit the dynamic load input, and via which the gearbox unit (4) is direct or indirectly in operative connection with the interface (7),
wherein the at least one linear actuator (5), the gearbox unit (4) and the at least one decoupling unit (1) are arranged in series with respect to each other and form a second force path for the dynamic load input,
wherein at least one elastically deformable element (2) is introduced along the second force path, along the serial arrangement consisting of the at least one linear actuator (5), the gearbox unit (4) and the at least one decoupling unit (1), that the support element (3) and the one elastically deformable element (2) are constructed and disposed as units that are distinct and spatially separate from one another,
**characterized in**
**that** the gearbox unit is embodied as a mechanical path transmission mechanism having at least one lever mechanism, and the components of the active bearing that are included along both force paths are surrounded by a compressible medium.

2. Active bearing according to Claim 1, **characterized in that** the decoupling unit (1) has a dynamic stiffness, which depends on the frequency of the dynamic load input.

3. Active bearing according to Claim 2, **characterized in that** the dynamic stiffness of the decoupling unit (1) increases at least with increasing frequency in a frequency range.

4. Active bearing according to any one of Claims 1 to 3, **characterized in that** the dynamic stiffness of at least one elastically deformable element (2) is largely independent of the frequency, or that the at least one elastically deformable element (2) has a dynamic stiffness that is at least smaller than the dynamic stiffness of the decoupling unit (1), and
that the stiffness of the elastically deformable element (2) limits a maximum dynamic stiffness of an assembly which is arranged in series along the second force path, which assembly comprises the at least one linear actuator (5), the gearbox unit (4), the at least one decoupling device (1) and the at least one elastically deformable element (2).

5. Active bearing according to any one of Claims 1 to 4, **characterized in that** the at least one elastically deformable element (2) is at least one spring element or includes at least one shaped body made from an elastomeric material or includes a combination of at least one spring element or at least one shaped body made from an elastomeric material.

6. Active bearing according to any one of Claims 1 to 5, **characterized in that** the decoupling unit (1) has more damping capacity than damping capacity that can be attributed to the elastically deformable element (2).

7. Active bearing according to any one of claims 1 to 6, **characterized in that** the decoupling unit (1) is designed as a viscous fluid damper, or includes at least one damping material or is a combination of viscous fluid damper and damping material.

8. Active bearing according to any one of claims 1 to 7, **characterized in that** the decoupling unit has a variably adjustable damping capacity.

9. Active bearing according to Claim 8, **characterized in that** at least one load-detecting sensor is integrated along the second force path and is connected to an evaluation and control unit which generates a control signal for controlling the adjustable damping capacity based on a target function.

10. Active bearing according to any one of Claims 1 to 9, **characterized in that** a control unit is provided which picks up a signal representing disturbance vibrations, which signal is detectable with at least one signal transmitter coupled indirectly or directly to the load and, after processing the signal the control unit generates control signals that actuate the at least one linear actuator (5) to effect a controlled transmission of vibrations between the load and the support unit (6).

11. Active bearing according to any one of Claims 1 to 10, **characterized in that** the at least one linear actuator (5) is embodied as a solid-state actuator having a longitudinal extension disposed transversely to the second force path, along which the actuating path change takes place,
that the gearbox unit (4) includes a two-part lever mechanism which is constructed and arranged substantially symmetrically with respect to the longitudinal extension of the linear actuator (5) and is in operative connection therewith, which lever mechanism converts actuating path changes of the linear actuator (5) into path changes orientated along the second force path and acting in opposite spatial directions, and
that the gearbox unit (4) is supported along the second force path between two elastic components corresponding in function to the at least one elastically deformable element (2).

12. Active bearing according to Claim 11, **characterized in that** the two-part lever mechanism arranged symmetrically with respect to the longitudinal extension of the linear actuator (5) and in operative connection therewith is designed such that the path changes orientated along the second force path and acting in opposite spatial directions are of equal magnitude.

13. Active bearing according to any one of Claims 1 to 12, **characterized in that** the gearbox unit which is operatively connected to the at least one linear actuator (5) included at least one means for transmission of an actuating path change, which means is designed to be elastically deformable and is the elastically deformable element (2) along the second force path.

14. Use of an active bearing according to any one of Claims 1 to 13 for at least reducing vibration of at least one motor unit with respect to a support structure supporting the motor unit.

15. Use according to Claim 14 in land, water or air vehicles in which the support structure is designed as a motor vehicle or rail vehicle body, a ship's hull or airframe.

16. Use of an active bearing according to any one of Claims 1 to 13 for at least reducing vibration of at least one vibration-sensitive component or structure respect to a vibrating support structure.

17. Use of an active bearing according to any one of Claims 1 to 13 for influencing the vibrational state of the load.

## Revendications

1. Palier actif pour une transmission de vibrations contrôlée comportant :
a) une interface (7) à installer sur une charge à stocker (8), dont l'application de force statique et dynamique à coordonner agit par l'intermédiaire de l'interface (7) sur le palier,
b) au moins un élément de soutien (3) en liaison opérationnelle avec l'interface (7) et une unité de soutien (6), qui soutient au moins l'application de charge statique de la charge par l'intermédiaire d'un premier trajet de force,
c) au moins un actionneur linéaire (5) s'appuyant directement ou indirectement sur l'unité de soutien (6),
d) une unité de transmission (4) en liaison opérationnelle avec au moins un actionneur linéaire (5) pour la démultiplication de rapport d'une variation de trajet de réglage provenant de l'actionneur linéaire (5),
e) au moins une unité de découplage (1), qui sert au découplage de l'application de charge statique ainsi qu'à la transmission de l'application de charge dynamique et est en liaison opérationnelle directement ou indirectement par l'intermédiaire de l'unité de transmission (4) avec l'interface (7),
dans lequel au moins un actionneur linéaire (5), l'unité de transmission (4) et au moins une unité de découplage (1) sont disposées en série les uns par rapport aux autres et forment un deuxième trajet de force pour l'application de force dynamique,
dans lequel le long de la disposition en série à partir d'au moins un actionneur linéaire (5), l'unité de transmission (4) et au moins une unité de découplage (1) au moins un élément déformable élastiquement (2) est monté le long d'un deuxième trajet de force, en ce que l'élément de soutien (3) et l'élément déformable élastiquement (2) sont configurés et disposés respectivement comme des unités séparées et spatialement isolées l'une de l'autre, **caractérisé en ce que**
l'unité de transmission est configurée comme un mécanisme de démultiplication de rapport mécanique, qui dispose d'au moins un mécanisme de levier, et **en ce que** les composants du palier actif contenus le long des deux trajets de force sont entourés par un milieu compressible.

2. Palier actif selon la revendication 1, **caractérisé en ce que** l'unité de découplage (1) possède une rigidité dynamique, qui dépend de la fréquence de l'application de force dynamique.

3. Palier actif selon la revendication 2, **caractérisé en ce que** la rigidité dynamique de l'unité de découplage (1) augmente au moins dans une plage de fréquence avec une fréquence croissante.

4. Palier actif selon une des revendications 1 à 3, **caractérisé en ce que** la rigidité dynamique d'au moins un élément indéformable élastiquement (2) est essentiellement indépendante de la fréquence et que au moins un élément déformable élastiquement (2) possède une rigidité dynamique, qui est au moins plus petite que la rigidité dynamique de l'unité de découplage (1), et
**en ce que** la rigidité de l'élément déformable élastiquement (2) limite une rigidité dynamique maximale d'un ensemble disposé en série le long du deuxième trajet de force, comprenant au moins un actionneur linéaire (5), l'unité de transmission (4), au moins une unité de découplage (1) ainsi qu'au moins un élément déformable élastiquement (2).

5. Palier actif selon une des revendications 1 à 4, **caractérisé en ce que** au moins un élément déformable élastiquement (2) est au moins un élément de ressort ou présente au moins un corps façonné constitué d'un matériau élastomère ou présente une combinaison d'au moins un élément de ressort ou au moins un corps façonné constitué d'un matériau élastomère.

6. Palier actif selon une des revendications 1 à 5, **caractérisé en ce que** l'unité de découplage (1) possède un amortissement plus grand qu'un amortissement pouvant être affecté à l'élément (2) déformable élastiquement.

7. Palier actif selon une des revendications 1 à 6, **caractérisé en ce que** l'unité de découplage (1) est configurée comme un amortisseur de liquide visqueux, qui présente au moins un matériau amortisseur ou une combinaison d'un amortisseur de liquide visqueux et d'un matériau amortisseur.

8. Palier actif selon une des revendications 1 à 7, **caractérisé en ce que** l'unité de découplage (1) dispose d'un amortissement réglable de manière variable.

9. Palier actif selon la revendication 8, **caractérisé en ce que**, le long du deuxième trajet de force au moins un capteur absorbant la charge est intégré, qui est relié à une unité d'évaluation et de commande, qui en se basant sur une fonction cible génère un signal de commande pour influencer l'amortissement pouvant être réglé.

10. Palier actif selon une des revendications 1 à 9, **caractérisé en ce que** une unité de commande est prévue, qui absorbe un signal pouvant être détecté avec au moins un émetteur de signaux couplés directement ou indirectement à la charge, qui représente des vibrations perturbatrices, et après le traitement du signal génère des signaux de commande, qui commandent au moins un actionneur linéaire (5), afin de provoquer une transmission des vibrations contrôlées entre la charge et l'unité de soutien (6).

11. Palier actif selon une des revendications 1 à 10, **caractérisé en ce que** au moins un actionneur linéaire (5) est configuré sous la forme d'un actionneur à corps solide avec une extension longitudinale à disposer transversalement au deuxième trajet de force, le long de laquelle a lieu la variation de trajet de réglage,
**en ce que** l'unité de transmission (4) présente un mécanisme de levier en deux parties, configuré et disposé de manière essentiellement symétrique à l'extension longitudinale de l'actionneur linéaire (5) et en liaison opérationnelle avec ce dernier, qui convertit les variations de trajet de réglage de l'actionneur linéaire (5) en variations de trajet orientées le long du deuxième trajet de force et agissant dans des directions spatiales opposées, et
**en ce que** l'unité de transmission (4) est positionnée le long du deuxième trajet de force entre deux composants élastiques correspondant fonctionnellement à au moins un élément déformable élastiquement (2).

12. Palier actif selon la revendication 11, **caractérisé en ce que** le mécanisme de levier en deux parties, disposé symétriquement à l'extension longitudinale de l'actionneur linéaire (5) et en liaison opérationnelle avec ce dernier et configuré de telle sorte que les variations de trajet orientées le long du deuxième trajet de force et agissant dans des directions spatiales opposées soient de grandeurs identiques.

13. Palier actif selon une des revendications 1 à 12, **caractérisé en ce que** l'unité de transmission étant en liaison opérationnelle avec au moins un actionneur linéaire (5) présente au moins un moyen de démultiplication des rapports, qui est configuré de manière déformable élastiquement et constitue l'élément déformable élastiquement (2) le long du deuxième trajet de force.

14. Utilisation d'un palier actif selon une des revendications 1 à 13 au moins pour la diminution des vibrations entre une unité de moteur par rapport à une structure porteuse soutenant l'unité de moteur.

15. Utilisation selon la revendication 14, dans des véhicules terrestres, aquatiques ou aériens, dans lequel la structure porteuse est configurée comme une carrosserie de véhicule automobile ou de véhicule ferroviaire, une coque de bateau ou une structure d'avion.

16. Utilisation d'un palier actif selon une des revendications 1 à 13 au moins pour la diminution des vibrations d'au moins un composant ou une structure sensible aux vibrations par rapport à une structure porteuse vibrante.

17. Utilisation d'un palier actif selon une des revendications 1 à 13 pour influencer l'état de vibration de la charge.
